(19) Europäisches Patentamt
European Patent Office
Office européen des brevets

(11) **EP 3 508 873 B1**

(12) **EUROPEAN PATENT SPECIFICATION**

(45) Date of publication and mention
of the grant of the patent:
**08.05.2024 Bulletin 2024/19**

(21) Application number: **17846545.6**

(22) Date of filing: **30.08.2017**

(51) International Patent Classification (IPC):
*G01S 17/931* (2020.01)  *G01S 7/481* (2006.01)
*G01S 17/86* (2020.01)  *G08G 1/16* (2006.01)
*G01S 13/931* (2020.01)

(52) Cooperative Patent Classification (CPC):
**G01S 7/4817; G01S 17/86; G01S 17/931;
G08G 1/16;** G01S 13/931

(86) International application number:
**PCT/JP2017/031104**

(87) International publication number:
**WO 2018/043541 (08.03.2018 Gazette 2018/10)**

(54) **MEASURING DEVICE, CONTROL DEVICE, CONTROL METHOD, AND PROGRAM**

MESSVORRICHTUNG, STEUERUNGSVERFAHREN, STEUERUNGSVERFAHREN UND PROGRAMM

DISPOSITIF DE MESURE, DISPOSITIF DE COMMANDE, PROCÉDÉ DE COMMANDE ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2016 JP 2016169960**

(43) Date of publication of application:
**10.07.2019 Bulletin 2019/28**

(73) Proprietor: **Pioneer Corporation
Tokyo 113-0021 (JP)**

(72) Inventors:
• **KUROKI Eiji
Tokyo 112-0002 (JP)**
• **WATANABE Hiroyuki
Tokyo 112-0002 (JP)**

(74) Representative: **Vossius & Partner
Patentanwälte Rechtsanwälte mbB
Siebertstrasse 3
81675 München (DE)**

(56) References cited:
JP-A- H0 829 536  JP-A- 2002 174 684
JP-A- 2004 333 440  JP-A- 2004 347 574
JP-A- 2009 115 628  JP-A- 2009 276 195
JP-A- 2012 189 366  US-A- 4 916 536
US-A1- 2004 065 814  US-A1- 2005 219 506

**Description**

TECHNICAL FIELD

The present invention relates to a measurement device, a control method, and a program.

BACKGROUND ART

A technology for detecting obstacles and the like by scanning the obstacles by emitting an electromagnetic wave have been developed.

Patent Document 1 discloses a technology for detecting an obstacle or the like in which a device installed in an automobile or the like performs a scan within a target area by irradiating a laser beam. In addition, Patent Document 1 discloses a technology for changing a central axis in the horizontal direction of the scan area according to a steering angle of an automobile.

Patent Document 2 describes an object detecting device for emitting electromagnetic waves in a forward direction and detecting an object from reflected waves of said emitted electromagnetic waves.

Patent Document 3 describes an object recognition device for a vehicle that emits transmission waves in a predetermined angular range in each of a vehicle-width direction and a vehicle-height direction and recognizes an object in front of the vehicle based on reflected transmission waves.

Patent Document 4 describes a laser radar system that emits a laser beam toward the preceding vehicle in a front side of the own vehicle, and receives the laser reflected by the preceding vehicle. The laser radar system is provided with a horizontal scanning actuator for scanning an emission direction of the laser beam horizontally, a vertical scanning actuator for scanning the emission direction vertically, and a radar signal processing/control part for controlling the horizontal scanning actuator and the vertical scanning actuator to calculate the intervehicular distance based on a time difference between the emission of the laser beam and the reception thereof. The radar signal processing/control part scans the laser beam horizontally, when the intervehicular distance is a prescribed distance or more, scans the laser beam vertically, when the intervehicular distance is less than the prescribed distance, and a body rear part of the approaching vehicle is surely detected by the horizontal scanning.

Patent Document 5 describes that a laser head of a distance measuring apparatus is set at a height of 35cm from a pavement. A single laser light having small diameter is emitted from the laser head in one of eight directions. When the optical axis of the apparatus is directed in a reference direction, the laser lights in three downward direction among eight directions are reflected at the point P, Q or R on the pavement. The apparatus then measures the distance to the reflecting point. When the apparatus is mounted on an automobile, shift of the optical axis can be detected with reference to the distances to the points P, Q and R.

Patent Document 6 describes an on-vehicle radar system for irradiating periodically the front side of an own vehicle with a pulse-like electromagnetic wave, and for measuring at least a horizontal-directional width of a target, based on a reflected wave therefrom.

RELATED DOCUMENT

PATENT DOCUMENT

[Patent Document 1] Japanese Patent Application Publication No. 2006-258604
[Patent Document 2] US 2004/065814 A1
[Patent Document 3] US 2005/219506 A1
[Patent Document 4] JP 2004 333440 A
[Patent Document 5] JP H08 29536 A
[Patent Document 6] JP 2009 115628 A

SUMMARY OF THE INVENTION

TECHNICAL PROBLEM

In a measuring device that performs a scan using electromagnetic waves, sometimes it is desired to scan an object a desired di stance away from the measuring device. A method of enabling the scan of the object positioned at a desired distance away from the measuring device includes a method of appropriately setting a scan range by calibrating the measuring device before operating the measuring device. However, even if the calibration is performed, sometimes it is not possible to scan the object positioned at a desired distance away from the measuring device due to an inaccurate calibration or a change in the posture of the measuring device after the calibration.

As the technology disclosed in Patent Document 1, even if the center axis of the scan area is changed in the horizontal direction, a distance between the object to be scanned and the measuring device cannot be the desired distance.

The present invention has been made in view of the above-described problems, and one of objects of the present invention is to provide a technology that makes it possible to scan the object a desired distance away with the electromagnetic wave.

SOLUTION TO PROBLEM

The present invention is defined in the claims.

BRIEF DESCRIPTION OF THE DRAWINGS

The object described above and other objects, features and advantages will become more apparent from the following description of the preferred embodiments and the accompanying drawings.
Fig. 1 is a block diagram illustrating a measuring device according to an embodiment 1.
Fig. 2 is a diagram illustrating a scan range of the measuring unit when seen in a front view.
Fig. 3 is a diagram illustrating an electromagnetic wave whose emission directions are different from each other in a height direction.
Fig. 4 is a diagram illustrating a scan range determined by a control unit.
Fig. 5 is a flowchart illustrating a processing flow executed by the measuring device according to the embodiment 1.
Fig. 6 is a diagram illustrating a hardware configuration of the control unit.
Fig. 7 is a diagram illustrating a hardware configuration of the measuring unit.
Fig. 8 is a diagram illustrating a hardware configuration of the measuring unit that emits light.
Fig. 9 is a diagram illustrating a measuring device installed in a moving object.
Fig. 10 is a diagram illustrating a trajectory of scan by the measuring unit when seen in a front view.
Fig. 11 is a diagram illustrating the scan range seen in a front view that is segmented by a unit of emitting the electromagnetic waves from a measuring device.
Fig. 12 is a diagram illustrating a scan range of the measuring unit in a height direction.
Fig. 13 is a diagram illustrating a result of scan by the measuring unit.
Fig. 14 is a diagram illustrating a result of scan by the measuring unit.
Fig. 15 is a diagram illustrating a result of measurement when there is a large obstacle at a position a predetermined distance away from the measuring device.
Fig. 16 is a flowchart illustrating a processing flow executed by the control unit according to an embodiment 4.
Fig. 17 is a diagram illustrating condition information in a table format.
Fig. 18 is a flowchart illustrating a processing flow executed by the control unit according to an embodiment 5.

DESCRIPTION OF EMBODIMENTS

Hereinafter, embodiments of the present invention will be described with reference to the drawings. In all the drawings, similar configuration elements are denoted by the same reference numerals, and the description thereof will not be repeated.

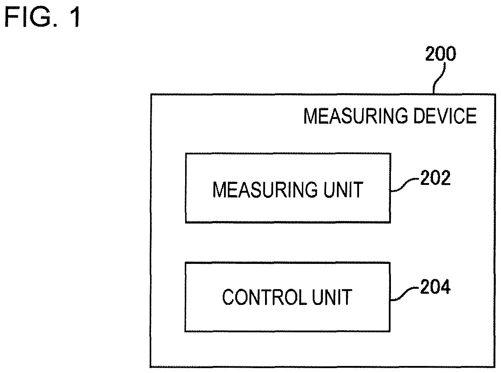

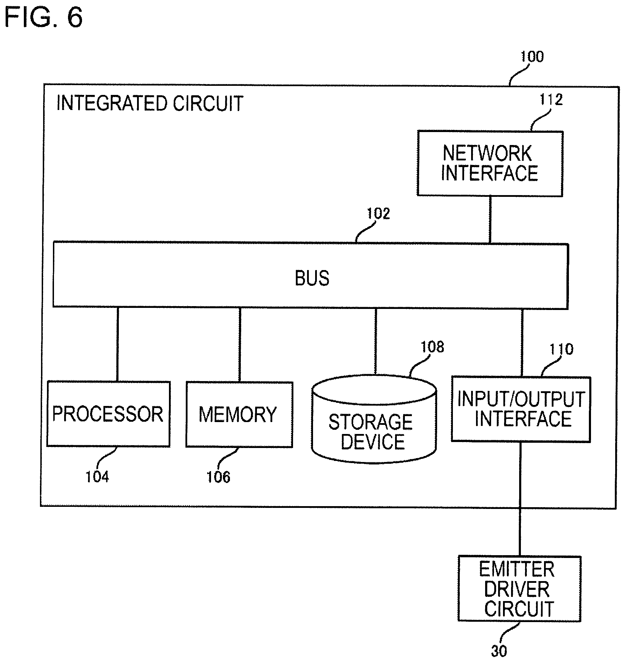

Fig. 1 is a block diagram illustrating a measuring device 200 according to an embodiment 1. In FIG. 1, each block represents not a configuration in a hardware unit but a configuration in a functional unit. The hardware configuration of the measuring device 200 will be described later with reference to Fig. 6 to Fig. 8.
The measuring device 200 includes a measuring unit 202 and a control unit 204. The measuring unit 202 scans the object by emitting an electromagnetic wave. Here, the measuring unit 202 scans the object while changing the emission direction of the electromagnetic wave in two dimensions of height direction and lateral direction. The height direction means substantially the height direction. In addition, the lateral direction means substantially the horizontal direction.

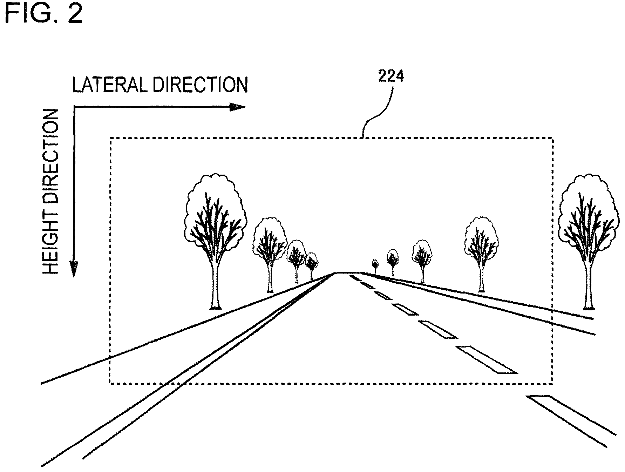

Fig. 2 is a diagram illustrating a scan range of the measuring unit 202 when seen in a front view. A scan range 224 represents the scan range of the measuring unit 202.
The control unit 204 controls the measuring unit 202. Specifically, the control unit 204 determines the scan range of the subsequent scan performed by the measuring unit 202 in terms of the height direction, based on the received signal of the measuring unit 202 (a signal representing the result of receiving the electromagnetic wave reflected from the object).

For example, in the scan performed by the measuring unit 202, the control unit 204 determines an emission direction that satisfies a predetermined condition of the emission direction from the measuring unit 202 in terms of the height direction, based on an elapsed time from when the measuring unit 202 emits the electromagnetic wave to when the reflected wave of the electromagnetic wave is received by the measuring unit 202. The predetermined condition is a condition that represents a fact that "an object positioned around a desired distance away from the measuring device 200 has been scanned". Specific examples of the predetermined condition will be described in the embodiments described later.

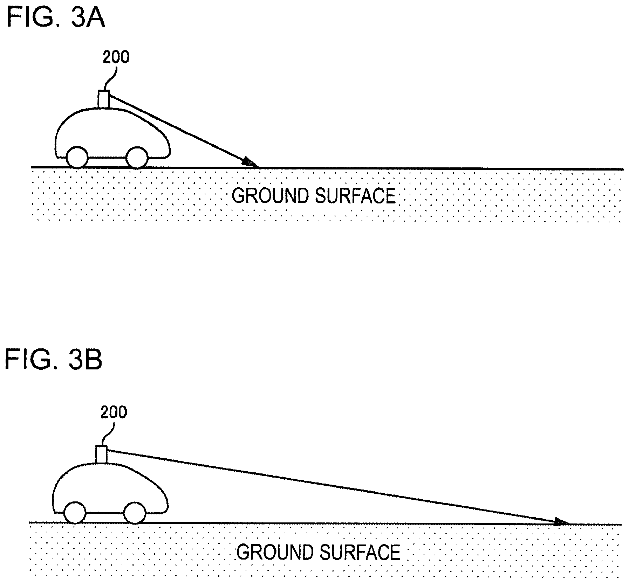

Here, the distance to the object scanned by the measuring device 200 depends on the height direction of the emitted electromagnetic wave. Fig. 3 is a diagram illustrating the electromagnetic wave whose emission directions are different from each other in the height direction. In a case of Fig. 3(a), an object located at a distance closer to the measuring device 200 is scanned compared to a case of Fig. 3(b).

The control unit 204 determines the scan range in the subsequent scan by the measuring unit 202 in the height direction based on the height direction of the emission direction that satisfies the predetermined condition. For example, the control unit 204 determines a new scan range 224 such that the height direction of the emission direction satisfying the predetermined condition becomes a center of the scan range 224 in the height direction. The subsequent scan by the measuring unit 202 is performed on the scan range determined in this way.

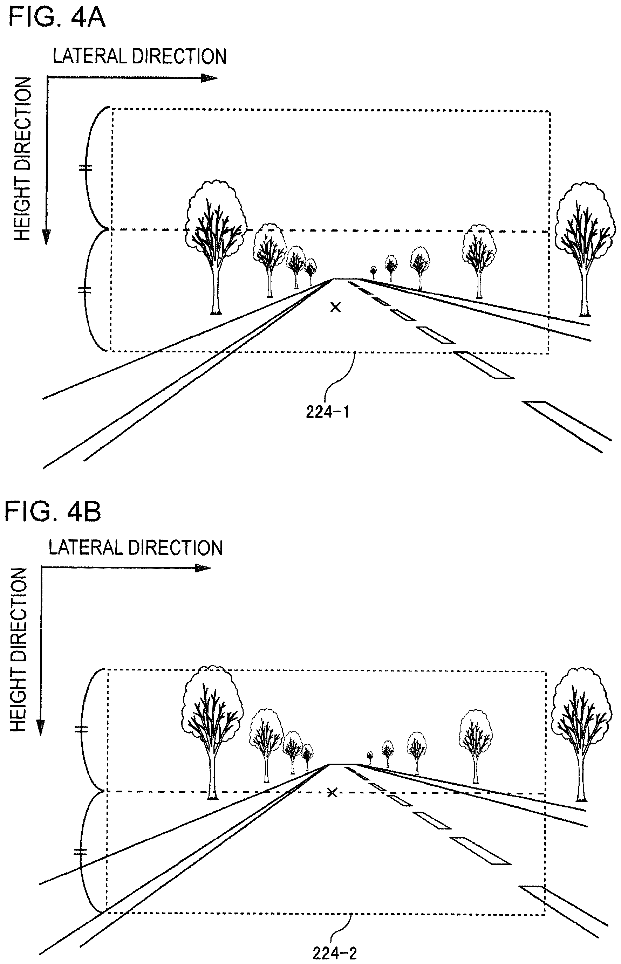

Fig. 4 is a diagram illustrating the scan range 224 determined by the control unit 204. Fig. 4(a) represents a scan range 224-1 before the determination is performed by the control unit 204. On the other hand, Fig. 4(b) represents a scan range 224-2 newly determined by the control unit 204. A cross mark in Fig. 4 represents the direction toward which the electromagnetic wave satisfying the predetermined condition is emitted. In the example in Fig. 4, the control unit 204 determines the new scan range 224-2 such that the height direction of the cross mark in the emission direction becomes a predetermined position in the height direction of the scan range. For example, in Fig. 4(b), the control unit 204 determines the new scan range 224-2 such that the height direction of the cross mark in the emission direction becomes a center in the height direction of the scan range.

As illustrated in Fig. 3, the distance to the object scanned by the measuring device 200 depends on the height direction of the emitted electromagnetic wave (refer to Fig. 3). According to the measuring device 200 in the present embodiment, the scan range 224 of the subsequent scan performed by the measuring unit 202 is determined based on the result of scan performed by the measuring unit 202. More specifically, the scan range 224 is determined in terms of the height direction such that the direction toward the desired distance away from the measuring device 200 becomes a predetermined position (for example, the center) in the height direction of the scan range 224. Therefore, an object positioned at a desired distance away from the measuring device 200 can be scanned by the measuring device 200.

The measuring device 200 is installed in a moving object such as an automobile or a train. The measuring device 200 is used, for example, for detecting an obstacle on the flow line of such a moving object. In this case, it may be preferable to be able to detect the obstacle positioned at a desired distance away from the moving object.

As a method of enabling the scan of an object positioned around a desired distance away from the measuring device 200, it is conceivable to calibrate the measuring device 200 before operating the measuring device 200. However, it is sometimes not possible to scan the object positioned around a desired distance away even if the calibration is performed, since the calibration may be inaccurate, or the pose of the measuring device 200 may change due to vibration applied to the measuring device 200 during the operation.

According to the measuring device 200 in the present embodiment, the scan range 224 is automatically adjusted in terms of the height direction during the operation of the measuring device 200. Therefore, even when the calibration is inaccurate, or the pose of the measuring device 200 changes due to vibration applied to the measuring device 200 during the operation, it is possible to automatically perform the adjustment such that the measuring device 200 can scan the object positioned around the desired distance away from the measuring device 200.

Furthermore, according to the measuring device 200 in the present embodiment, even if the calibration of the measuring device 200 is not performed, it is possible to automatically adjust the scan range of the measuring device 200 so as to can scan the object positioned around the desired distance away from the measuring device 200. Therefore, it is possible to omit the effort for calibrating the measuring device 200.

Hereinafter, the measuring device 200 in the present embodiment will be described in detail.

<Processing Flow>

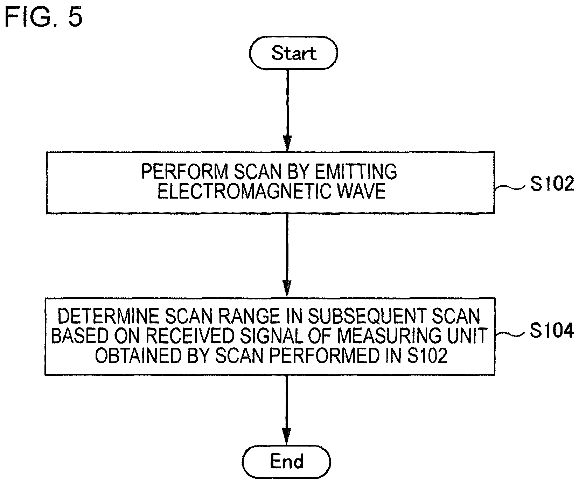

Fig. 5 is a flowchart illustrating a processing flow executed by the measuring device 200 according to the embodiment 1. The measuring unit 202 emits the electromagnetic wave and performs the scan of the object (S 102). The control unit 204 determines the scan range of the subsequent scan performed by the measuring unit 202 based on the received signal of measuring unit 202 due to the scan performed in S 102 (S104).

<Hardware Configuration Example of Measuring Device 200>

Each functional configuration unit of the measuring device 200 may be realized by hardware (for example, hard-wired electronic circuit, or the like) that realizes each functional configuration unit, or may be realized by a combination of hardware and software (for example, a combination of an electronic circuit and a program for controlling the circuit). Hereinafter, the case where each functional configuration unit of the measuring device 200 is realized by a combination of the hardware and the software will be further described.

Fig. 6 is a diagram illustrating a hardware configuration of the control unit 204. An integrated circuit 100 is an integrated circuit realizing the control unit 204. For example, the integrated circuit 100 is a SoC (System On Chip).

The integrated circuit 100 includes a bus 102, a processor 104, a memory 106, a storage device 108, an input/output interface 110, and a network interface 112. The bus 102 is a data transmission path through which the processor 104, the memory 106, the storage device 108, the input/output interface 110, and the network interface 112 mutually transmit and receive data. However, the method of connecting the processor 104 and the like to each other is not limited to the bus connection. The processor 104 is a processor realized by using a microprocessor or the like. The memory 106 is a memory realized by using RAM (Random Access Memory) or the like. The storage device 108 is a storage device realized by using ROM (Read Only Memory), a flash memory, or the like.

The input/output interface 110 is an interface for connecting the integrated circuit 100 to peripheral devices. In Fig. 6, an emitter driver circuit 30 is connected to the input/output interface 110. The emitter driver circuit 30 will be described later.

The network interface 112 is an interface for connecting the integrated circuit 100 to a communication network. The communication network is, for example, a controller area network (CAN) communication network. The method for the network interface 112 to connect to the communication network may be a wireless connection or may be a wired connection.

The storage device 108 stores a program module for realizing the function of the control unit 204. The processor 104 realizes the function of the control unit 204 by reading the program module out to the memory 106 and executing the program module.

The hardware configuration of the integrated circuit 100 is not limited to the configuration illustrated in Fig. 6. For example, the program module may be stored in the memory 106. In this case, the integrated circuit 100 may not include the storage device 108.

<<Hardware Configuration Example of Measuring Unit 202>>

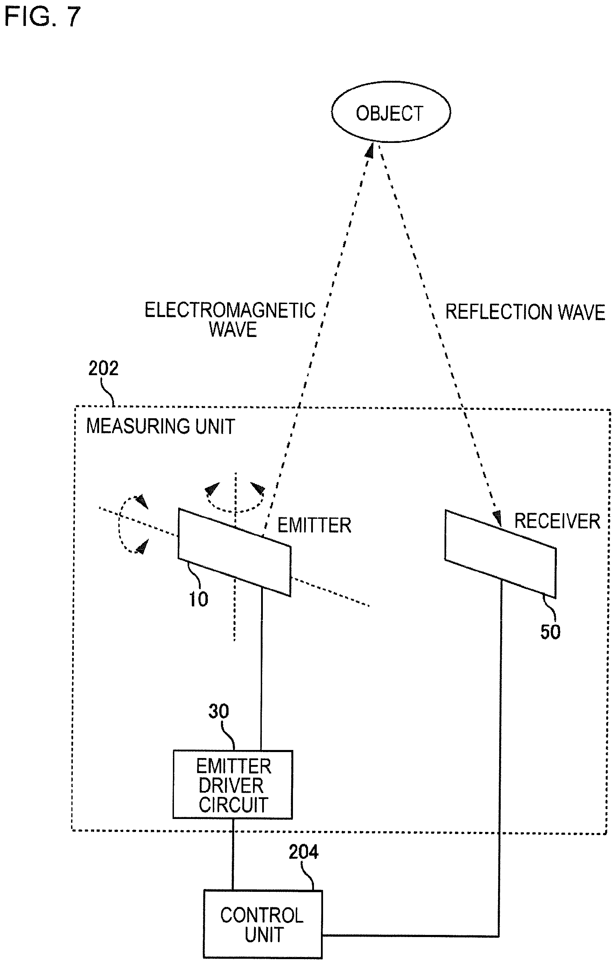

Fig. 7 is a diagram illustrating a hardware configuration of the measuring unit 202. The measuring unit 202 includes an emitter 10, an emitter driver circuit 30, and a receiver 50. The emitter 10 emits the electromagnetic wave used for the scan. Here, the emitter 10 is configured to be variable in terms of the emission direction, and is therefore possible to emit the electromagnetic wave in various directions. The emitter driver circuit 30 is a circuit for driving the emitter 10. The receiver 50 receives a reflected wave of the electromagnetic wave emitted to the outside of the measuring device 200.

The control unit 204 detects that the reflected wave is received by the receiver 50. For example, the receiver 50 is configured to transmit a predetermined signal to the control unit 204 in response to the reception of the reflected wave. The control unit 204 detects that the reflected wave is received by the receiver 50 by receiving the predetermined signal. The received signal of the measuring unit 202 is, for example, the predetermined signal.

The electromagnetic wave emitted by the emitter 10 may be a light beam such as a laser beam or a radio wave such as Extremely high frequency wave. Hereinafter, the hardware configuration of the measuring unit 202 when the emitter 10 emits light will be described. The same configuration can be adopted for the measuring unit 202 when the emitter 10 emits the electromagnetic wave.

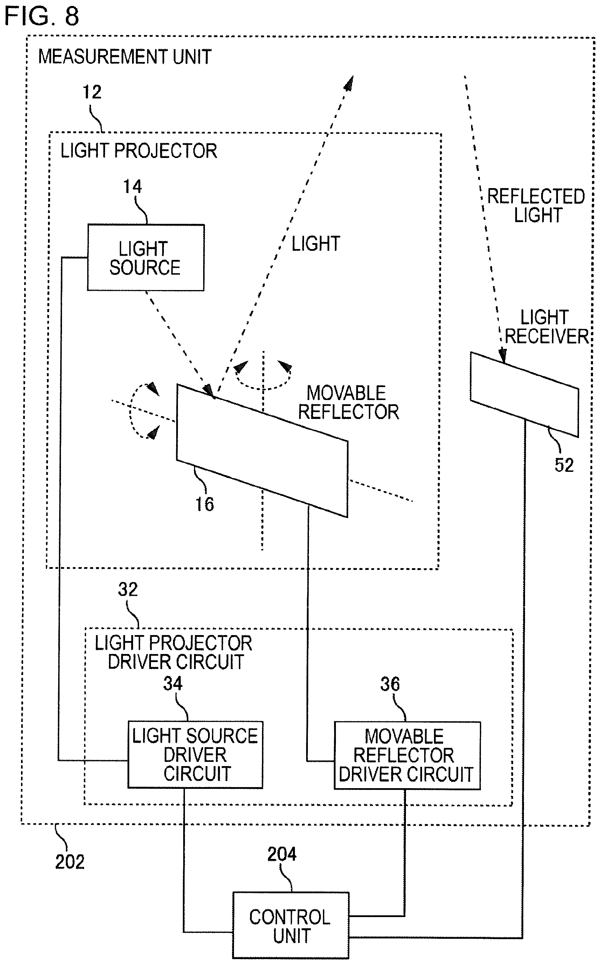

Fig. 8 is a diagram illustrating a hardware configuration of the measuring unit 202 that emits light. A light projector 12 and a light projector driver circuit 32 in Fig. 8 are examples of the emitter 10 and the emitter driver circuit 30 in Fig. 7, respectively. The light projector 12 includes a light source 14 and a movable reflector 16. The light projector driver circuit 32 includes a light source driver circuit 34 and a movable reflector driver circuit 36.

The light source 14 is any light source that emits the light. The light source driver circuit 34 is a circuit that drives the light source 14 by controlling the supply of power to the light source 14. The light emitted by the light source 14 is, for example, a laser beam. In this case, for example, the light source 14 is a semiconductor laser that emits the laser beam.

The movable reflector 16 reflects the light emitted from the light source 14. The light reflected by the movable reflector 16 is emitted to the outside of the measuring device 200. The movable reflector driver circuit 36 is a circuit for driving the movable reflector 16. For example, the movable reflector 16 includes one mirror that is configured to be rotatable at least in two directions: the height direction and the lateral direction. This mirror is, for example, a micro electro mechanical system (MEMS) mirror.

The configuration of the movable reflector 16 is not limited to the configuration illustrated in Fig. 8. For example, the movable reflector 16 may include two mirrors whose axes of rotation intersect each other.

Furthermore in Fig. 8, the measuring unit 202 includes a light receiver 52. The light receiver 52 is an example of the receiver 50 in Fig. 7. The light receiver 52 receives the reflected light of the light emitted to the outside of the measuring device 200. For example, the light receiver 52 includes an avalanche photodiode (APD).

The configuration of the measuring unit 202 is not limited to the configurations illustrated in Fig. 7 and Fig. 8. For example, in Fig. 8, the measuring unit 202 is configured to be able to emit the light in various directions by reflecting the light emitted from the light source 14 by the movable reflector 16. However, the configuration for emitting the light in various directions is not limited to the configuration illustrated in Fig. 8. For example, the light source 14 itself may include a mechanism of rotating in the height direction and the lateral direction. In this case, the measuring unit 202 can emit the light in various directions by controlling the pose of the light source 14. In addition in this case, the measuring unit 202 may not include the movable reflector 16 and the movable reflector driver circuit 36. Furthermore in this case, the light source driver circuit 34 controls the pose of the light source 14 in addition to the light emission by the light source 14.

The hardware for realizing the control unit 204 (refer to Fig. 6) and the hardware for realizing the measuring unit 202 (refer to Fig. 7 and Fig. 8) may be packaged in the same housing or may be packaged in the separated housings.

<Installation Example of Measuring Device 200>

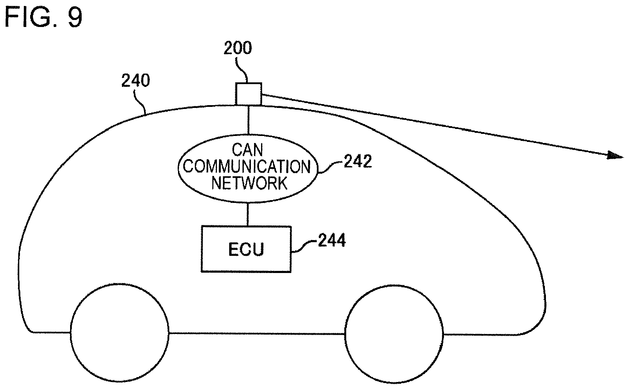

The measuring device 200 is installed in a moving object such as an automobile or a train. Fig. 9 is a diagram illustrating the measuring device 200 installed in a moving object 240. In Fig. 9, the measuring device 200 is fixed on the top portion of the moving object 240. In addition, the measuring device 200 is connected to the control device 244 through the CAN communication network 242. The control device 244 is a control device that controls the moving object 240. For example, the control device 244 is an electronic control unit (ECU).

Here, the control unit 204 may be realized as a part of the control device 244 that controls the moving object 240. In this case, the program module for realizing the above-described control unit 204 is stored in the storage device included in the control device 244.

The place where the measuring device 200 is installed is not limited to the top portion of the moving object 240. For example, the measuring device 200 may be installed inside (for example, in a cabin) the moving object 240. The measuring device 200 may also be installed on a non-moving object.

<Scan by Measuring Unit 202>

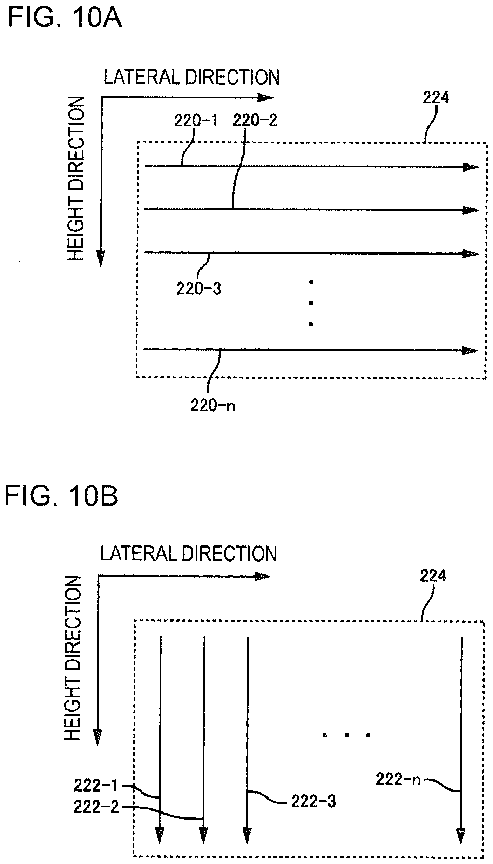

The scan by the measuring unit 202 may be the scan performed in the lateral direction or may be the scan performed in the height direction. Fig. 10 is a diagram illustrating a trajectory of scan by the measuring unit 202 when seen in a front view. Fig. 10(a) illustrates the scan performed in the lateral direction. In Fig. 10(a), the scan in the lateral direction are sequentially performed for n lines (n is a natural number) whose height directions of the emission of the electromagnetic waves are different from each other. Specifically, a scan 220-1 to a scan 220-n are sequentially performed. Then, after the scan 220-n is performed, the scan 220-1 to the scan 220-n are sequentially performed again.

Hereinafter, it is represented as "line scan" to perform scan in a single line. In addition, it is collectively represented as "perform one cycle of scan" to perform the scan once for each of the n lines (for example, the scan 220-1 to the scan 220-n are performed once in Fig. 10(a)).

Fig. 10(b) illustrates the scan performed in the height direction. In terms of the scan in the height direction, the scan in the height direction is sequentially performed for n lines whose lateral directions of the emission of the electromagnetic waves are different from each other. Also in terms of the scan in the height direction, it is collectively represented as "perform one cycle of scan" to perform scan once for each of the n lines (for example, the scan 222-1 to the scan 222-n are performed once in Fig. 10 (b)).

The scan range of the measuring unit 202 represents a range scanned in one cycle of scan. In other words, the scan range of the measuring unit 202 is determined by a swing width of the electromagnetic wave emitted by the measuring device 200 in the height direction and a swing width in the lateral direction.

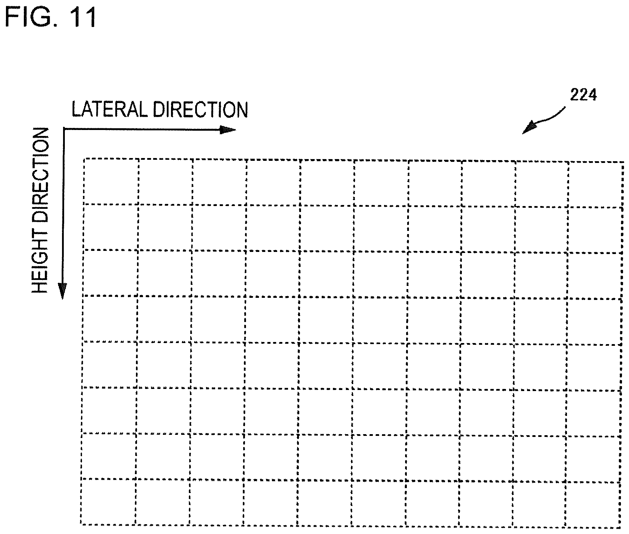

The measuring unit 202 emits the electromagnetic waves in a plurality of directions in one line scan by emitting the electromagnetic waves a plurality of times in one line scan. Fig. 11 is a diagram illustrating the scan range 224 seen in a front view that is segmented by a unit of emitting the electromagnetic waves from the measuring device 200. The measuring unit 202 emits each electromagnetic wave so as to pass through each grid illustrated in Fig. 11. For each emitted electromagnetic wave, the measuring device 200 measures time from the emission of the electromagnetic wave to the reception of the reflected wave by the measuring device 200. Hereinafter, the directions of the electromagnetic waves emitted so as to pass through the $i_{th}$ row and the $j_{th}$ column (both i and j are positive integers) of the scan range 224 segmented in the grid shape is defined as "direction to $i_{th}$ row and $j_{th}$ column".

<Measurement by Measuring Device 200>

The control unit 204 measures an elapsed time from the emission of the electromagnetic wave from the emitter 10 to the reception of the reflected wave of the electromagnetic wave by the receiver 50, and then stores the measured time in a storage device (for example, the storage device 108) in association with the emission direction. This elapsed time is, for example, represented by a value obtained by multiplying the number of clock signals, which is counted during the period from the emission of the electromagnetic wave from the emitter 10 to the reception of the reflected wave of the electromagnetic wave, by the clock frequency. In addition, for example, this elapsed time may be represented by the number of clock signals counted.

[Embodiment 2]

Similarly to the measuring device 200 in the embodiment 1, a measuring device 200 in an embodiment 2 is represented by, for example, Fig. 1. The function of the measuring device 200 in the embodiment 2 is the same as the function of the measuring device 200 in the embodiment 1 except for the points described below.

In the present embodiment, the measuring unit 202 performs a line scan in the lateral direction (refer to Fig. 10(a)). The control unit 204 determines the scan range of the measuring unit 202 by determining the center of the scan range in the height direction (the center direction of the swing width in the height direction toward which the measuring device 200 emits the electromagnetic wave), regarding the measuring unit 202 performing such the line scan in lateral direction.

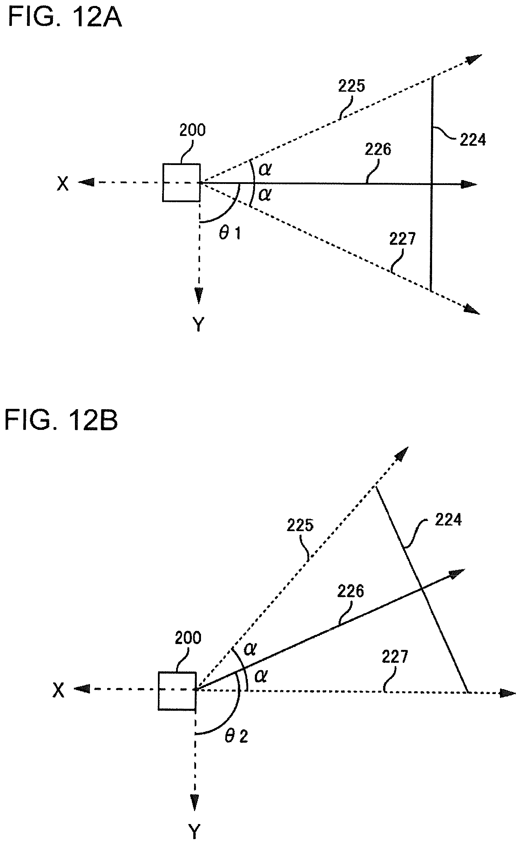

Fig. 12 is a diagram illustrating the scan range of the measuring unit 202 in the height direction. An upper-most direction 225 is a direction passing an upper-most position of the scan range 224 in the height direction. A center direction 226 is a direction passing through a center position of the scan range 224 in the height direction. A lowest direction 227 is a direction passing through a lowest position of the scan range 224 in the height direction.

In Fig. 12(a), the angle formed by the center direction 226 and the Y axis is $\theta 1$. In addition, the swing width of the emission direction of the electromagnetic wave from the measuring device 200 is $2\alpha$. Therefore, the direction toward which the measuring device 200 emits the electromagnetic waves is in the range of $\theta 1 - \alpha$ to $\theta 1 + \alpha$ in terms of the height direction.

Here in the example in Fig. 12, it is assumed that the control unit 204 in the present embodiment determines to set the center direction of the scan range 224 in the height direction to $\theta 2$. Then, the scan range in the height direction of the subsequent scan is the range illustrated in Fig. 12(b). Specifically, the direction toward which the measuring device 200 emits the electromagnetic wave becomes in the range of $\theta 2 - \alpha$ to $\theta 2 + \alpha$ in terms of the height direction.

The control unit 204 performs the determination of the scan range 224 based on results of a plurality of line scans among a plurality of line scans (for example, the scan 220-1 to the scan 220-n in Fig. 10(b)) performed in the lateral direction. Hereinafter, the line scan used for the determination of the scan range 224 is represented as a target line scan.

The target line scans may be all the line scans in a certain one cycle or a part of line scans in a certain one cycle. Furthermore, all the target line scans may be included in one cycle, or all or a part of the target line scans may be included in different cycles. Information indicating which line scan is handled as a target line scan may be set in the control unit 204 in advance or may be stored in the storage device to which the control unit 204 can access.

The control unit 204 determines a result of measurement that satisfies a predetermined condition from the results of measurement in a plurality of target line scans. As described above, the predetermined condition is a condition representing a fact that "an object positioned around a desired distance away from the measuring device 200 is scanned". The control unit 204 determines the scan range of the subsequent scan in the cycle after those cycles based on the determined results of measurement.

For example, the predetermined condition described above is a condition relating to the distance between the object scanned by the measuring device 200 and the measuring device 200 or a condition relating to the elapsed time measured by the measuring device 200. Hereinafter, several methods for determining the scan range 224 using the conditions relating to each factor will be exemplified.

<Determination Method 1>

The control unit 204 performs the determination of the scan range 224 based on the result of measurement in which the distance between each object scanned in the plurality of target line scans and the measuring device 200 satisfies a predetermined condition. In order to do that, the control unit 204 calculates the distance between each object scanned and the measuring device 200 based on the result of measurement in the multiple target line scans. Then, the control unit 204 determines the scan range 224 based on the result of measurement in which the distance satisfies the predetermined condition.

To that end, firstly, the control unit 204 computes the distance between each object scanned by the measuring unit 202 and the measuring device 200. The computation is performed using, for example, the following Equation (1).
[Equation 1]

$$D[m][i][j] = C * t[m][i][j]/2 \cdot \cdot \cdot (1)$$

Here, D[m][i][j] represents the distance compute for the electromagnetic waves emitted in the direction to $i_{th}$ row and $j_{th}$ column in the $m_{th}$ cycle. C represents a speed of the electromagnetic wave. t[m][i][j] represents the elapsed time measured for the electromagnetic wave emitted in the direction to $i_{th}$ row and $j_{th}$ column in the $m_{th}$ cycle. However, when the elapsed time is represented by the number of clocks, what used for t[m][i][j] is a value obtained by multiplying the measurement time (the number of clocks) measured for the electromagnetic waves emitted in the direction to the $i_{th}$ row and $j_{th}$ column in the $m_{th}$ cycle by the clock frequency.

The control unit 204 sets the predetermined distance or a predetermined range for the distance as the predetermined condition described above. Each of those will be described in detail below.

<When Predetermined Distance is used as Predetermined condition>

The control unit 204 determines a distance closest to the predetermined distance among the distances D[m][i][j] computed for the plurality of target line scans. The predetermined distance may be set in the control unit 204 in advance or may be stored in a storage device to which the control unit 204 can access.

Then, the control unit 204 sets the height direction of the emission direction in the scan from which the determined distance is obtained, as the center of the scan range 224 in the height direction at the subsequent scan. For example, suppose that the distance closest to the predetermined distance is D[2][3][4]. In this case, the control unit 204 sets the center of the scan range 224 in the height direction for the subsequent scans, to the height direction of the emission direction at the target line scan of the third row in the second cycle.

Here, it is assumed that, the distance closest to the predetermined distance is computed in each of two or more target line scans. The control unit 204 may determine the scan range 224 in the subsequent scan using (1) the height direction of the emission direction in one target line scan among two or more target line scans, or (2) a statistical value of the height directions of the emission direction in those two or more target line scans.

In the former case, for example, the control unit 204 counts the number of result of measurements in which the distance closest to the predetermined distance is computed, for each target line scan. Then, the control unit 204 determines the height direction of the emission direction in the target line scan having the largest number, as the center of the scan range 224 in the height direction in the subsequent scan. Note that, the above-described two or more target line scans may include only the line scan in the same cycle, or may include the line scan in different cycles. Hereinafter, details of the method will be described with condition to the drawings.

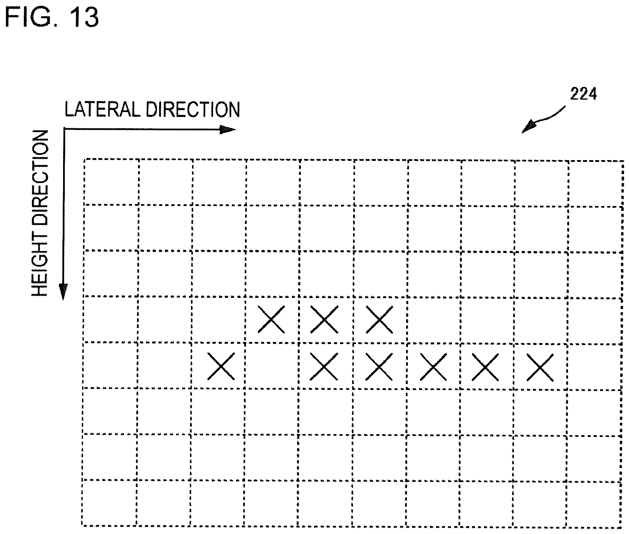

Fig. 13 is a diagram illustrating a result of scan by the measuring unit 202. In Fig. 13, similar to Fig. 11, the scan range 224 is segmented in the grid shape. In the example in Fig. 13, the predetermined distance is 100m. Cross marks are indicated in the emission direction corresponding to the electromagnetic wave whose distance from the measuring device 200 to the object is computed as 100m.

In Fig. 13, in the distances computed for the target line scans in the fourth line, there are three 100m points, which are the same as the predetermined distance. On the other hand, in the distance computed for the target line scans in the fifth row, there are six 100m points, which are the same as the predetermined distance. Therefore, the control unit 204 sets the height direction of the emission direction in the target line scans of the fifth line, as the center of the height direction of the scan range 224 in the subsequent scan.

When statistical values of height direction of the emission direction for two or more target line scans are used, the control unit 204 sets the statistical value of the height direction of the emission direction in these target line scan, as the center of the height direction of the scan range 224 in the subsequent scan. For example in the case in Fig. 13, the control unit 204 computes an average of the height direction of the emission direction in the target line scan for the fourth row and the height direction of the emission direction in the target line scan for the fifth row, as the center of the height direction of the scan range 224 in the subsequent scan. At this time, the control unit 204 may determine the number of result of measurements for which the distance closest to the predetermined distance is computed for each target line scan, and may calculate a weighted average based on the number. For example in the case in Fig. 13, the control unit 204 assigns a weight of 3 to the height direction of the emission direction in the target line scan for the fourth row, assigns a weight of 6 to the height direction of the emission direction in the target line scan for the fifth row, and then, computes the weighted average.

When using the result of scan in a plurality of cycles, for example, the control unit 204 may operate as follows. Firstly, the control unit 204 determines a target line scan having the largest number of distances closest to the predetermined distance, for each cycle. The control unit 204 sets the statistical value of the height direction of the emission direction in each determined target line scan, as the center of the height direction of the scan range 224 in the subsequent scan.

For example, it is assumed that the scan range in the scan in the subsequent cycle is determined using the result of scans from the first cycle to the fifth cycle. In this case, it is assumed that the target line scans having the largest number of distances closest to the predetermined distance for each cycle are: the target line scan in the fifth line in the first cycle; the target line scan in the fourth line in the second cycle; the target line scan in the fifth line in the third cycle; the target line scan in the sixth line in the fourth cycle; and the target line scan in the fifth line in the fifth cycle. In this case, for example, the control unit 204 determines the height direction of the emission direction in the target line scan for the fifth row, which is the most frequent value, as the center of the height direction of the scan range 224 in the subsequent scan. In another example, the control unit 204 determines the average of the height direction of the emission direction in each determined target line scan, as the center of the height direction of the scan range 224 in the subsequent scan.

<<When Predetermined Range of Distance is set as Predetermined condition>>

The control unit 204 determines the scan range such that the distance to the object scanned by the measuring unit 202 becomes the distance included in the predetermined range. Therefore, the control unit 204 computes the distance D[m][i][j] for each of two or more target line scans using the above-described method. Further, the control unit 204 determines the distance included in the predetermined range from the calculated distance D[m][i][j]. Then, the control unit 204 sets the height direction of the emission direction in the target line scan from which the determined distance is obtained, as the center of the height direction of the scan range 224 in the subsequent scan. The predetermined range may be set in advance in the control unit 204 or may be stored in a storage device to which the control unit 204 can access.

Here, it is assumed that the distance included in the predetermined range is computed from the result of measurement for each of two or more target line scan. In this case, the control unit 204 determines the center of the height direction of the scan range 224 in the subsequent scan, based on the result of those two or more target line scans. This method is similar to the case in which, when the predetermined distance is used as the predetermined condition, the center of the height direction of the scan range 224 in the subsequent scan is determined based on the result of two or more target line scans for which the distance closest to the predetermined distance is computed. For example, the control unit 204 sets the height direction of the emission direction in the target line scan having the largest number of results of measurement in which the distance included in the predetermined range is computed, as the center of the height direction of the scan range 224 at the subsequent scan.

<Determination Method 2>

The control unit 204 performs the determination of the scan range 224 based on the result of measurement in which the elapsed times measured in a plurality of target line scans satisfies a predetermined condition. In this case, a predetermined time or a predetermined range of elapsed time is used as the predetermined condition. Each will be described below.

«When Predetermined Time is used as Predetermined condition»

By the same method as in the case where the predetermined distance is used as the predetermined condition in the determination method 1 described above, the control unit 204 performs the determination of the scan range 224 using the predetermined time as the predetermined condition. This predetermined time corresponds to time between when the electromagnetic wave is emitted to the object positioned at the predetermined distance from the measuring device 200 and when the reflected wave of the electromagnetic wave is received by the measuring device 200. For example, the predetermined time tp can be computed using the predetermined distance dp and the speed C of the electromagnetic wave based on the following Equation (2). The predetermined time tp may be set in advance in the control unit 204 or may be stored in a storage device to which the control unit 204 can access.

Equation (2)

$$tp = \frac{2 * dp}{c} \quad \cdot \quad \cdot \quad \cdot \quad (2)$$

The control unit 204 performs the determination of the scan range 224 using the predetermined time tp. For example, the control unit 204 specifies the elapsed time closest to the predetermined time tp from the elapsed times t[m][i][j] measured for a plurality of target line scans. Then, the control unit 204 sets the height direction of the emission direction of the electromagnetic wave in the target line scan from which the determined elapsed time is obtained, as the center of the height direction of the scan range 224 in the subsequent scan. In addition, the method of determining the scan range when the elapsed time nearest to the predetermined time tp is measured for a plurality of target line scans is similar to the method of determining the scan range 224 when the distance closest to the predetermined distance is computed for a plurality of target line scans in the determination method 1.

<<When Predetermined Range of Elapsed Time is used as Predetermined condition>>

By the same method as in the case the predetermined range of the distance is used as the predetermined condition in the above determination method 1, the control unit 204 performs the determination of the scan range 224 using the predetermined range of elapsed time as the predetermined condition. The lower limit value of the predetermined range of the elapsed time can be computed based on the lower limit value of the predetermined range of the distance and Equation (2) described above. In addition, the upper limit value of the predetermined range of the elapsed time can be calculated based on the upper limit value of the predetermined range of the distance and Equation (2) described above. The predetermined range may be set in advance in the control unit 204 or may be stored in the storage unit that the control unit 204 can access.

For example, the control unit 204 determines the elapsed time included in the predetermined range of elapsed time, from the elapsed times t[m][i][j]. Then, the control unit 204 sets the height direction of the emission direction in the target line scan from which the determined elapsed time is obtained, as the center of the height direction of the scan range 224 in the subsequent scan. The method of determining the scan range when the elapsed time included in the predetermined range is measured for a plurality of target line scans is similar to the method of determining the scan range when the distance included in the predetermined range is computed for a plurality of target line scans in determination method 1.

<Timing for Performing Determination of Scan range 224>

The timing for the control unit 204 to perform the determination of the scan range 224 may be any timing. For example, the control unit 204 periodically performs the determination of the scan range 224. In this way, it is possible to assure that the center of the height direction of scan range 224 is in the desired direction at a periodic timing.

In another example, the control unit 204 may perform the determination of the scan range 224 in response to the detection of vibration. For example, the detection of the vibration is performed using a vibration sensor. The vibration sensor may be provided inside the measuring device 200 or may be provided outside the measuring device 200. In the latter case, for example, the vibration sensor is provided in the moving object 240. In this case, if a vibration having a magnitude larger than a predetermined magnitude is detected by the moving object 240, the measuring device 200 receives notification of the detection from the moving object. Then, the measuring device 200 performs the determination of the scan range 224 in response to the reception of the notification. In this way, the determination of the scan range 224 is performed at a timing at which there is a possibility that the pose of the measuring device 200 may change due to the vibration applied to the moving object 240 on which the measuring device 200 or the measuring device 200 is installed, and thus, the scan range 224 is adjusted. Therefore, even if the pose of the measuring device 200 changes due to the vibration, the center of the scan range 224 in the height direction can be kept in a desired direction.

<Example of Hardware Configuration>

Similar to the hardware configuration of the measuring device 200 in the embodiment 1, the hardware configuration of the measuring device 200 in the embodiment 2 is illustrated, for example, in Fig. 6 to Fig. 8. In addition, in the present embodiment, a program for realizing the functions described in the present embodiment is further included in the program module stored in the storage device 108 described above.

According to the measuring device 200 in the present embodiment, the center of the scan range 224 in the height direction is determined based on the result of measurement and the predetermined condition in the scan in the lateral direction. In this way, even when the calibration is inaccurate, or the pose of the measuring device 200 is changed due to vibration applied to the measuring device 200 during the operation, it is possible to make the object around a desired distance away from the measuring device 200 be included in the scan range 224. In addition, it is possible to omit the effort of calibrating the measuring device 200.

[Embodiment 3]

A measuring device 200 in an embodiment 3 is represented by, for example, Fig. 1, similarly to the measuring device 200 in the embodiment 1 or in the embodiment 2. The function of the measuring device 200 in the embodiment 3 is the same as the function of the measuring device 200 in the embodiment 1 except the points described below.

In the present embodiment, the measuring unit 202 performs a line scan in the height direction (see Fig. 10(b)). The control unit 204 determines the scan range of the measuring unit 202 by determining the center of the scan range 224 in the height direction (the center of the swing width of the emission direction of the emitter 10) for the measuring unit 202 performing the line scan in the height direction.

Here, the measuring unit 202 in the embodiment 2 performs the determination of the scan range using a plurality of results of line scans as described above. On the contrary, the measuring unit 202 in the present embodiment may perform the determination of the scan range based on a certain one result of line scan, or may perform the determination of the scan range based on a plurality of results of line scans. The reason thereof is as follows.

First, the distance between the object scanned by the measuring device 200 and the measuring device 200 depends on the height direction of the emitted electromagnetic wave, while less depending on the lateral direction of the electromagnetic wave. Therefore, in the line scan in the lateral direction, there is a high probability that the distance between each object scanned in the line scan and the measuring device 200 may be substantially the same. Therefore, in only one line scan, it is not highly possible to obtain the result of measurement of scanning the object positioned around a desired distance away from the measuring device 200. Therefore, the measuring device 200 in the embodiment 2 uses the result of measurement for a plurality of line scans.

On the other hand, in the line scan in the height direction, each emission direction of the electromagnetic wave emitted in one line scan differs from each other in the height direction. Therefore, in the line scan in the height direction, there is a high probability that the distances between each object scanned in the line scan and the measuring device 200 are different from each other. Therefore, even in only one line scan, with a high probability, it is possible to obtain the result of measurement of scanning the object around a desired distance away from the measuring device 200. Therefore, the measuring device 200 in the present embodiment can determine the scan range 224 based on one result of line scan.

The control unit 204 performs the determination of the scan range based on one or more results of line scans among a plurality of line scans (for example, the scan 222-1 to the scan 222-n in Fig. 10(b)) performed in the height direction. As described above, the line scan used for determining the scan range is described as the target line scan. When a plurality of line scans are handled as the target line scan, all the target line scans may be included in one cycle, or all or a part of the target line scans may be included in different cycles. Information indicating which line scan is treated as a target line scan may be set in the control unit 204 in advance or may be stored in the storage device to which the control unit 204 can access.

In the present embodiment also, the control unit 204 determines the scan range 224 based on the various predetermined conditions (such as the predetermined distance, the predetermined range of distance, the predetermined time, the predetermined range of the elapsed time, and the like) described in the embodiment 2. Hereafter, details will be described below.

<Determination Method 1>

The control unit 204 calculates the distance from each object scanned in the target line scan to the measuring device 200, respectively. Then, the control unit 204 determines the scan range 224 using the predetermined distance or the predetermined range of the distance as the predetermined condition.

<<When Predetermined Distance is used as Predetermined condition>>

The control unit 204 determines the distance closest to the predetermined distance from the plurality of distances D [m][i][j] computed in the target line scan. Then, the control unit 204 determines the height direction of the emission direction of the electromagnetic wave corresponding to the result of measurement for which the predetermined distance is computed as the center of the scan range 224 in the height direction in the subsequent scan.

For example, it is assumed that the distance closest to the predetermined distance among the computed distances is D[1][4][5]. In this case, the control unit 204 determines the height direction (the height direction of the fourth row) of the electromagnetic wave emitted in the direction of fourth row and fifth column as the center of the scan range 224 in the height direction in the subsequent scan. The method of computing the distance from the scanned object to the measuring device 200 is the same as that described in the embodiment 1.

Here, it is assumed that the distance closest to the predetermined distance is computed for two or more results of measurements. In this case, for example, the control unit 204 sets the statistical value of the height direction of the emission direction of the electromagnetic wave when each result of measurement is obtained, as the center of the scan range 224 in the height direction in the subsequent scan.

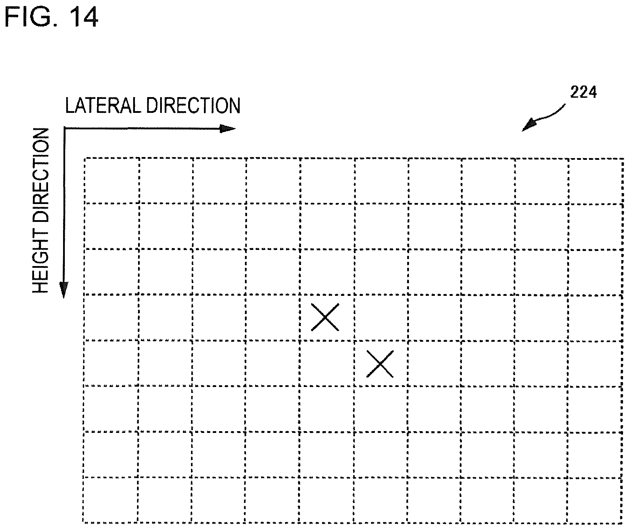

Fig. 14 is a diagram illustrating a result of scan by the measuring unit 202. In Fig. 14, the scan range 224 segmented in a grid shape is illustrated. In Fig. 14, the scan range 224 is segmented in the grid shape as in Fig. 11. In the example in Fig. 14, the predetermined distance is 100m. Cross marks are indicated in the grid corresponding to the emission direction of the electromagnetic wave whose distance from the measuring device 200 to the object is 100m.

In Fig. 14, the grids where the cross mark is indicated are a grid of fourth row and fifth column and a grid of fifth row and sixth column. Therefore, the control unit 204 sets the statistic value (for example, average) of the height direction of the fourth row and the height direction of the fifth row, as the center of the scan range 224 in the height direction in the subsequent scan.

Here, the control unit 204 may exclude a part of target line scans from the calculation target of the statistical value when calculating the statistical value. As described above, the measuring device 200 is installed in the moving object 240, for example. In this case, for example in the measuring device 200, it is preferable that the center of the scan range 224 in the height direction is a direction toward the object positioned around the predetermined distance (for example, 100m) away from the measuring device 200.

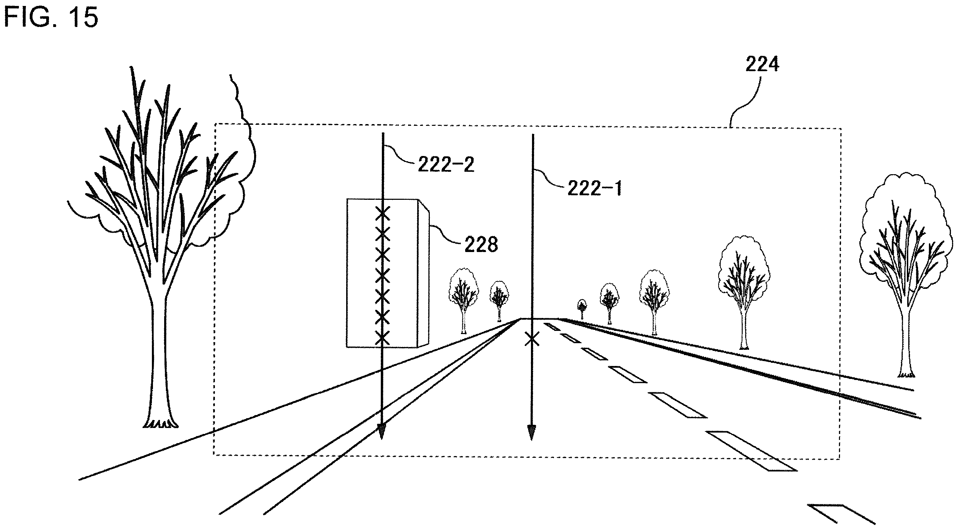

At this time, if there is a large obstacle such as a building around the predetermined distance away from the measuring device 200, in the result of measurement of the line scan which scans the obstacle, many results of measurements that calculate the distances that are the same as or close to the predetermined distance are included. Fig. 15 is a diagram illustrating a result of measurement when there is a large obstacle around a position a predetermined distance away from the measuring device 200. In Fig. 15, the predetermined distance is 100m. Then, cross marks are indicated in the result of measurement in which the distance from the measuring device 200 is computed as 100m.

The line scan 222-1 is scanning the road. In this case, the distances between each position of the road scanned by the line scan 222-1 and the measuring device 200 are different from each other. Therefore, in the line scan 222-1, there is only one result of measurement in which the distance is computed as 100m which is same as the predetermined distance. Accordingly, if the result of measurement of the line scan 222-1 is used, it is possible to appropriately determine the center of the scan range 224 in the height direction.

On the other hand, the line scan 222-2 is scanning the building 228. The building 228 is standing at 100m away from the measuring device 200. Therefore, in the line scan 222-2, there are many results of measurements in which the distance is calculated as 100m which is the same as the predetermined distance. Therefore, if the result of measurement of the line scan 222-2 is used, there is a problem in that the center of the scan range 224 in the height direction of scan may not be appropriately determined.

Therefore, among the target line scans for which the measurement result where the distance closest to the predetermined distance is computed is obtained, the control unit 204 excludes the line scan, in which a lot of computation results where the distance closest to the predetermined distance is computed similar to the line scan 222-2 in Fig. 15, from targets of computing the above-mentioned statistical value. For example, from the target line scan for which the distance closest to the predetermined distance is computed, the control unit 204 extracts only a target line scan whose number of results of measurements in which that distance is computed is equal to or less than a predetermined number. Then, in this extracted target line scan, the control unit 204 computes a statistical value of the height direction of the emission direction of the electromagnetic wave corresponding to each result of measurement in which the distance closest to the predetermined distance is computed. In this way, even if there is a large obstacle at or near the predetermined distance away from the measuring device 200, the scan range 224 of the measuring device 200 can appropriately be determined.

In addition, according to this method, like the result of measurement in which the large obstacle is scanned, it is possible to exclude the line scan which may cause the decrease of the accuracy of determination of the scan range 224 by the control unit 204 with a simple method. Therefore, the accuracy of determination of the scan range 224 by the control unit 204 can be increased with a simple method.

<<When Predetermined Range of Distance is used as Predetermined condition>>

The control unit 204 determines the scan range such that the distance to the object scanned by the measuring unit 202 becomes the distance included in the predetermined range. The control unit 204 calculates the distance D[m][i][j] for each of one or more target line scans using the method described above. Further, the control unit 204 determines the distance included in the predetermined range from the calculated distance D[m][i][j]. Then, the control unit 204 sets the height direction of the emission direction of the electromagnetic wave corresponding to the result of measurement from which the determined distance is obtained, as the center of the scan range 224 in the height direction in the subsequent scan. The predetermined range described above may be set in advance in the control unit 204 or may be stored in the storage device that the control unit 204 can access.

Here, it is assumed that the distance included in the predetermined range is computed for each of two or more results of measurements. In this case, the control unit 204 determines the center of the scan range 224 in the height direction in the subsequent scan based on these two or more results of measurements. For example, similar to the case of using the predetermined distance as the predetermined condition, The control unit 204 sets the statistical value of the height direction of the emission direction of the electromagnetic wave for which each result of measurement where the distance included in the predetermined range is computed is obtained, as the center of the scan range 224 in the height direction in the subsequent scan.

When calculating this statistical value, similarly to the case where the predetermined distance is used as the predetermined condition, a part of the target line scans may be excluded from the calculation target of the statistical value. Specifically, among the target line scan for which the result of measurement where the distance included in the predetermined range is computed is obtained, it excludes the line scan for which the large number of results of measurements where a distance included in the predetermined range is computed is obtained (for example, a predetermined number or more), from the calculation target of the statistical value described above.

<Determination Method 2>

Using the method similar to the case of using the predetermined distance and the predetermined range of the distance as the predetermined condition in the determination method 1 described above, the control unit 204 determines the scan range 224 using the predetermined range of the predetermined time and the elapsed time as the predetermined range. As described in the explanation relating to the embodiment 2, the predetermined time can be calculated from the predetermined distance based on Equation (2). In addition, as described in the explanation relating to the embodiment 2, the upper limit value and the lower limit value of the predetermined range of elapsed time can be calculated using the upper limit value and the lower limit value of the predetermined range of the distance and the Equation (2).

<Timing for Performing Determination of Scan range 224>

The timing for the control unit 204 in the present embodiment to perform the determination of the scan range 224 is similar to the timing for the control unit 204 in the embodiment 2 performs the determination of the scan range 224.

<Example of Hardware Configuration>

Similar to the hardware configuration of the measuring device 200 in the embodiment 1, the hardware configuration of the measuring device 200 in the embodiment 3 is illustrated, for example, in Fig. 6 to Fig. 8. In addition, a program for realizing the functions described in the present embodiment is further included in the program module stored in the storage device 108 described above.

According to the measuring device 200 in the present embodiment, the center of the scan range 224 in the height direction is determined based on the result of measurement and the predetermined condition in the scan in the lateral direction. In this way, similarly to the case of using the measuring device 200 in the embodiment 2, even when the calibration is inaccurate, or the pose of the measuring device 200 changes due to vibration applied to the measuring device 200 during the operation, it is possible to make the object around a desired distance away from the measuring device 200 be included in the scan range 224. In addition, it is possible to omit the effort of calibrating the measuring device 200.

As described above, according to the measuring device 200 in the present embodiment, the determination of the scan range 224 can be performed using the measurement result for one line scan. Accordingly, compared to the measuring device 200 in the embodiment 2, there are advantages that the time required for determining the scan range 224 can be shortened and the amount of computer resources required for determining the scan range 224 can be reduced.

Furthermore, as described above, according to the measuring device 200 of the present embodiment, it is possible to easily exclude the line scan that includes many results of measurements that satisfy the predetermined condition such as the line scan that scans the large obstacle, from the line scan used for determination of the scan range 224. In this way, it is possible to easily increase the accuracy of the determination of the scan range 224 by the control unit 204.

[Embodiment 4]

Similarly to the measuring device 200 in the embodiment 1 to embodiment 3, a measuring device 200 in an embodiment 4 is represented by, for example, Fig. 1. The function of the measuring device 200 in the embodiment 4 is the same as the functions of the measuring devices 200 in any of the embodiment 1 to embodiment 3 except the points described below.

The measuring device 200 in the embodiment 4 is provided in the moving object 240 (refer to Fig. 9). In addition, the control unit 204 in the embodiment 4 acquires information (hereinafter, speed information) indicating the speed of the moving object. Then, if the speed of the moving object indicated by the speed information is equal to or higher than a predetermined speed, the control unit 204 performs the determination of the scan range 224. On the other hand, if the speed of the moving object indicated by the speed information is lower than the predetermined speed, the control unit 204 does not determine the scan range 224.

The method of acquiring the speed information control unit 204 may be any method. For example, the control unit 204 acquires the speed information generated by the control device 244 through the CAN communication network 242. A well-known technique can be used for a method in which the control device of the moving object recognizes the speed of the moving object and a method in which the control device of the moving object transmits the information to other devices. In addition, a device for measuring the speed of the moving object 240 may be provided inside the measuring device 200. In this case, the measuring device 200 obtains the speed information from that device.

<Processing Flow>

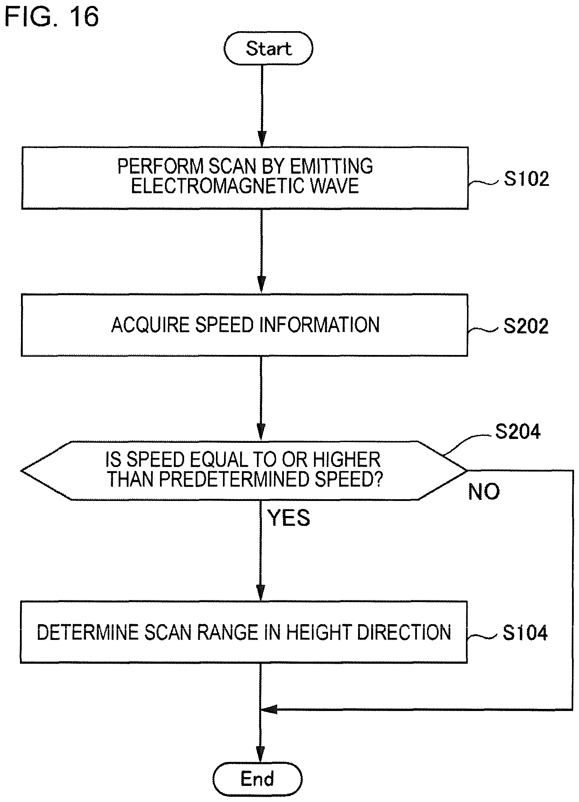

Fig. 16 is a flowchart illustrating a processing flow executed by the control unit 204 according to the embodiment 4. The processing performed in S102 and S104 in FIG. 16 is the same as the processing performed in S102 and S104 in FIG. 5.

In S202, the control unit 204 acquires the speed information. If the speed of the moving object indicated by the speed information is equal to or higher than the predetermined speed (S204: YES), the control unit 204 executes S104. On the other hand, if the speed of the moving object indicated by the speed information is lower than the predetermined speed (S204: NO), the processing in FIG. 16 ends.

The control unit 204 may or may not perform the determination whether or not the speed indicated in the speed information is equal to or higher than the predetermined speed at the timing when the above-described determination of scan range 224 is performed (the periodic timing or the timing at which the vibration is detected). In the latter case, for example, the control unit 204 performs the determination of whether or not the speed indicated in the speed information is equal to or higher than the predetermined speed once, and then, performs processes based on a result of the determination until the next determination is be performed . Specifically, if it is determined that the speed indicated in the speed information is equal to or higher than the predetermined speed, the control unit 204 determines the scan range 224 one or more times until the next determination is performed. Similarly, if it is determined that the speed indicated in the speed information is lower than the predetermined speed, the control unit 204 does not perform the determination of the scan range 224 until the next determination is performed.

If the speed of the moving object 240 is relatively slow, it is considered that large vibration is hardly applied to the moving object 240. Therefore, if the calibration of the measuring device 200 is accurately performed, even if adjustment of the scan range 224 is not performed when the speed of the moving object 240 is slow, it can be said to be highly possible that the object positioned around a desired distance away from the measuring device 200 is scanned by the measuring device 200.

Therefore, according to the present embodiment, the determination of the scan range 224 is performed when the speed of the moving object 240 is equal to or higher than the predetermined value. In this way, the frequency of performing the determination of the scan range 224 is reduced, and thus, the consumption of computer resources of the control unit 204 can be reduced. If it is considered that the necessity of adjustment of the scan range 224 is high (if the speed of the moving object 240 is equal to or higher than the predetermined value), the object positioned around a desired distance away from the measuring device 200 can be scanned by the measuring device 200 since the determination of the scan range 224 is performed.

Note that, assuming a case where the calibration of the measuring device 200 is not performed or the calibration of the measuring device 200 is inaccurate, the determination of the scan range 224 may be performed regardless of the speed of the moving object 240 at least once after startup. For example, after the startup of the control unit 204, the scan range 224 is determined regardless of the speed of the moving object 240 the predetermined number of times or more or during a period equal to or more than a predetermined time. Thereafter, the control unit 204 performs the determination of the scan range 224 when the speed of the moving object 240 is equal to or higher than the predetermined value. In this way, even if the calibration of the measuring device 200 is not performed or the calibration of the measuring device 200 is inaccurate, at an early stage after the startup, the object positioned around a desired distance away from the measuring device 200 can be scanned by the measuring device 200.

<Example of Hardware Configuration>

Similar to the hardware configuration of the measuring device 200 in the embodiment 1, the hardware configuration of the measuring device 200 in the embodiment 4 is illustrated, for example, in Fig. 6 to Fig. 8. In addition, in the present embodiment, a program for realizing the functions described in the present embodiment is further included in the program module stored in the storage device 108 described above.

[Embodiment 5]

Similarly to the measuring device 200 in the embodiment 1 to embodiment 4, a measuring device 200 in an embodiment 5 is represented by, for example, Fig. 1. The function of the measuring device 200 in the embodiment 5 is the same as the functions of the measuring devices 200 in any of the embodiment 1 to embodiment 4 except the points described below.

The measuring device 200 in the present embodiment is provided in the moving object 240 similarly to the measuring device 200 in the embodiment 4. In addition, the control unit 204 in the embodiment 5 acquires the speed information similarly to the control unit 204 in the embodiment 4. Then, the control unit 204 determines a predetermined condition for determining the scan range 224 based on the speed of the moving object 240. The predetermined condition is the predetermined distance, the predetermined range of the distance, the predetermined time, or the predetermined range of the elapsed time described in the description relating to the embodiment 2 and embodiment 3, for example.

The predetermined condition is determined in association with the speed of the moving object 240. More specifically, the predetermined condition is defined such that the object to be scanned becomes farther away from the measuring device 200 as the speed of the moving object 240 becomes higher. This is because the moving object 240 moves longer distance in a short time as the speed of the moving object 240 becomes higher, and it is preferable to set the measuring device 200 to scan the object farther away.

For example, if the predetermined condition is the predetermined distance or the predetermined time, these values become larger as the speed of the moving object 240 increases. In another example, if the predetermined condition is the distance or the predetermined range of elapsed time, the lower limit and the upper limit of these predetermined ranges become larger as the speed of the moving object 240 increases.

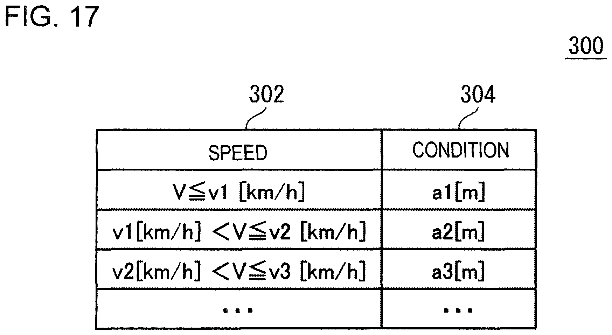

Information indicating the association between the predetermined reference and the speed of the moving object is referred to as reference information. Fig. 17 is a diagram illustrating the condition information in a table format. The table illustrated in Fig. 17 is referred to as condition information 300. The condition information 300 includes a speed 302 and a condition 304. The speed 302 indicates the range of speed. The condition 304 indicates a predetermined condition in association with the range of speed indicated in the speed 302. In Fig. 17, the condition 304 indicates the predetermined distance. For example, the record in the second line of the condition information 300 indicates that a predetermined condition "predetermined distance = a2[m]" is associated with the speed of the moving object 240 "higher than v1 and equal to or lower than v2".

The condition information is not limited to selectively determine the predetermined condition according to the speed of the moving object as illustrated in Fig. 17. For example, the condition information may be an equation for computing the predetermined condition from the speed of the moving object 240. In this case, for example, the condition information is defined as a function with the speed of the moving object 240 as an argument and the predetermined condition as a return value.

The condition information may be set in advance in the control unit 204 or may be stored in the storage device to which the control unit 204 can access.

<Processing Flow>

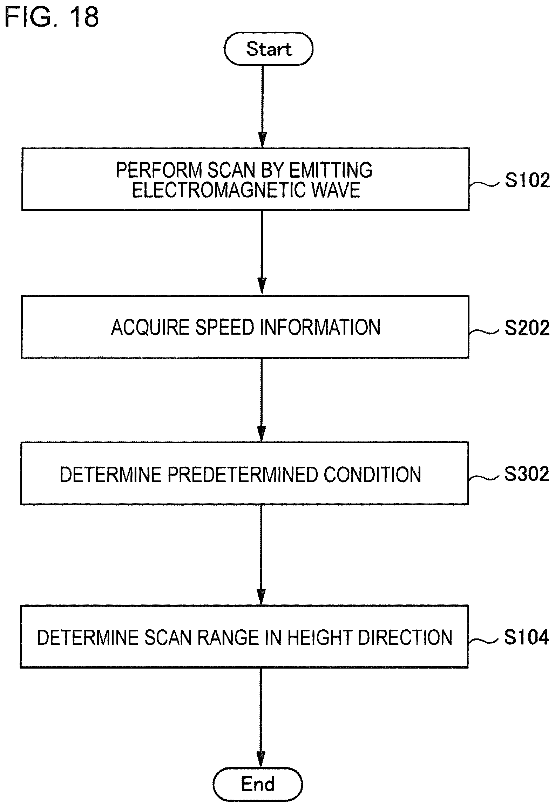

Fig. 18 is a flowchart illustrating a processing flow executed by the measuring device 200 according to the embodiment 5. The processing items performed in S102, S104, and S202 in Fig. 18 are the same as the processing items performed in S102, S104, and S202 in Fig. 17. In S302, the control unit 204 determines the predetermined condition based on the speed of the moving object 240 indicated in the speed information.

The higher the speed of the moving object 240 is, the longer distance the moving object 240 travels in a short time. Therefore, the higher the speed of the moving object 240 is, it is preferable that the farther objects are scanned by the measuring device 200.

Therefore, in the measuring device 200 in the present embodiment, the predetermined condition in determining the scan range 224 is determined according to the speed of the moving object 240. In this way, it is possible to scan the object at an appropriate distance according to the speed of the moving object 240.

<Example of Hardware Configuration>

Similar to the hardware configuration of the measuring device 200 in the embodiment 1, the hardware configuration of the measuring device 200 in the embodiment 5 is illustrated, for example, in Fig. 6 to Fig. 8. In addition, in the present embodiment, a program for realizing the functions described in the present embodiment is further included in the program module stored in the storage device 108 described above.

[Embodiment 6 (not covered by the claimed invention)]

A measuring device 200 in the present embodiment is represented by, for example, Fig. 1, similarly to the measuring device 200 in the embodiment 1. The function of the measuring device 200 in the embodiment 6 (not covered by the claimed invention) is the same as the function of the measuring device 200 in any of the embodiment 1 to embodiment 5 except the points described below.

In each embodiment described above, the control unit 204 determines the scan range in the subsequent scan in the height direction by the measuring unit 202 based on the height direction of the emission direction that satisfies the predetermined condition. In addition, "predetermined condition" is a condition representing that "an object positioned at a desired distance away from the measuring device 200 is scanned". In addition, for example, the predetermined condition is a condition such as "the computed distance to the object is the predetermined distance (distance range)" or "it is the predetermined time between when the electromagnetic wave is emitted to a certain object and when the reflected electromagnetic wave reflected by the object is received by the measuring device 200".

However, there is a case where the pose of the measuring device 200 (that is, the scan range of the measuring device) greatly changes (greatly deviates from the initial posture). Such change is caused, for example, by the vibration of a vehicle such the automobile on which the measuring device 200 is disposed. When such change occurs, at the timing of determining the scan range in the height direction in the subsequent scan by the measuring unit 202 as described above, there is a possibility that the signal received by the measuring unit 202 may not satisfy the predetermined condition described above. More specifically, any of the grids illustrated in Fig. 11 may not satisfy the predetermined condition. For example, as illustrated in Fig. 13, in a case where a cross mark is indicated in a grid whose distance calculated for the target line operation is the same as the predetermined distance, there may occur a situation where there is no grid in which the cross mark is indicated.

Further specifically, when the pose of the measuring device 200 (that is, the emission range of the electromagnetic wave by the measuring device 200) largely changes upward, the distance computed for the target line scan can become a value longer than 100m. Conversely, when the pose of the measuring device 200 changes largely downward, the distance computed for the target line scan may become a value shorter than 100m in either case.

As described above, when the change occurs in the pose of the measuring device 200, it becomes difficult to appropriately scan and measure the surroundings of the desired distance range (a position 100m away from the measuring device 200 in the example above).

Therefore, in the measuring device 200 in the present embodiment (not covered by the claimed invention), if the signal received by the measuring unit 202 does not satisfy the condition described above, the control unit 204 controls the measuring unit 202 such that the scan range of the measuring unit 202 (that is, the emission range of the electromagnetic wave emitted by the measuring unit 202) becomes upward or downward. In other words, if any of the emission directions of the electromagnetic wave in the scan range of the measuring unit 202 does not satisfy the predetermined condition, the control unit 204 moves the scan range of the measuring unit 202 upward or downward by a predetermined amount.

For example, at the timing to determine the scan range in the height direction in the subsequent scan by the measuring unit 202, it is assumed that any of the distances computed for the target line scan becomes below the predetermined condition (for example, when the predetermined distance is set as 100m, all are shorter than 100m). In this case, the control unit 204 controls the measuring unit 202 such that the scan range of the measuring unit 202 becomes upward by a predetermined angle. That is, the control unit 204 starts the scan with a condition as a state in which the emitter 10 (the movable reflector 16) is tilted upward by a predetermined angle.

Then, the control unit 204 repeats the control until the signal received by the measuring unit 202 satisfies the condition described above (until any of the distances computed for the target line scan becomes satisfy the predetermined condition). That is, the scan range of the measuring unit 202 is shifted upward by a predetermined angle until the predetermined condition is satisfied.

Similarly, at the timing to determine the scan range in the height direction in the subsequent scan by the measuring unit 202, it is assumed that any of the distances computed for the target line scan exceeds the predetermined condition (for example, when the predetermined distance is set as 100m, all are longer than 100m). In this case, the control unit 204 controls the measuring unit 202 such that the scan range of the measuring unit 202 becomes downward by a predetermined angle. That is, the control unit 204 starts the scan with a condition as a state in which the emitter 10 (the movable reflector 16) is tilted downward by a predetermined angle. Then, the control unit 204 repeats the control until the signal received by the measuring unit 202 satisfies the condition described above (until any of the distances computed for the target line scan becomes satisfy the predetermined condition). That is, the scan range of the measuring unit 202 is shifted downward by a predetermined angle until the predetermined condition is satisfied.

By performing such control, even if a situation occurs in which the pose of the measuring device 100 changes largely, it becomes possible to determine the height direction of the emission direction that satisfies the predetermined condition, and thus, it is possible to determine the scan range in the height direction in the subsequent scan by the measuring unit 202 based on the determined height direction. In this way, under various environments, the measuring device 200 can scan an object the predetermined distance away with the electromagnetic waves.

<Example of Hardware Configuration>

Similar to the hardware configuration of the measuring device 200 in the embodiment 1, the hardware configuration of the measuring device 200 in the embodiment 6 (not covered by the claimed invention) is illustrated, for example, in Fig. 6 to Fig. 8. In addition, in the present embodiment (not covered by the claimed invention), a program for realizing the functions described in the present embodiment (not covered by the claimed invention) is further included in the program module stored in the storage device 108 described above.

As described above, the embodiments of the present invention are described with reference to the drawings. However, these are examples of the present invention, and a combination of the above embodiments or various configurations other than the configurations described above may be adopted within the scope of the appended claims.

**Claims**

**1.** A measuring device (200) configured to be installed in a moving object (240), the measuring device comprising:

a measuring unit (202) that performs a scan by emitting an electromagnetic wave and receiving the electromagnetic wave reflected by a reflection object; and
a control unit (204) that controls the measuring unit,
wherein the control unit is configured to determine whether or not a speed of the moving object is equal to or higher than a predetermined speed, and wherein the control unit determines a scan range (224) in a second scan to be performed after a first scan based on a received signal of the measuring unit at the first scan by the measuring unit when it is determined that the speed of the moving object is equal to or higher than a predetermined speed,
and wherein the control unit is configured to determine, among emission directions (225, 226, 227) of the electromagnetic wave in the first scan, an emission direction that satisfies at least one of a first condition and a second condition for the electromagnetic wave based on the received signal in the first scan, and determines the scan range in the second scan based on the determined emission direction,
wherein the first condition is that an emission direction in which an elapsed time between when the measuring unit emits the electromagnetic wave and when the measuring unit receives the electromagnetic wave reflected by the reflection object is closest to a predetermined time or an emission direction in which the elapsed time is included in a predetermined time range from the predetermined time,
wherein the second condition is that an emission direction in which a distance to the reflection object is closest to a predetermined distance or an emission direction in which the distance is included in a predetermined distance range, the distance computed based on the received signal of the measuring unit,
**characterized in that**:

in the first condition, the predetermined time becomes larger as the value for the speed of the moving object becomes larger, or the lower limit and the upper limit of the predetermined time range become larger as the value for the speed of the moving object becomes larger, and
in the second condition, the predetermined distance becomes larger as the value for the speed of the moving object becomes larger, or the lower limit and the upper limit of the predetermined distance range become larger as the value for the speed of the moving object becomes larger.

2. The measuring device according to claim 1, wherein the measuring unit performs the scan in a height direction.

3. A control method for controlling a measuring device (200) installed in a moving object (240) using a computer, comprising:

causing the measuring device to perform (S102) a scan by emitting an electromagnetic wave and receiving the electromagnetic wave reflected by a reflection object;

determining (S204) whether or not a speed of the moving object is equal to or higher than a predetermined speed; and

determining (S104) a scan range (224) in a second scan to be performed after a first scan based on a received signal of the measuring device in the first scan by the measuring device when it is determined that the speed of the moving object is equal to or higher than a predetermined speed,

determining, among emission directions (225, 226, 227) of the electromagnetic wave in the first scan, an emission direction that satisfies at least one of a first condition and a second condition for the electromagnetic wave based on the received signal in the first scan, and

determining the scan range in the second scan based on the determined emission direction,

wherein the first condition is that an emission direction in which an elapsed time between when the measuring unit emits the electromagnetic wave and when the measuring unit receives the electromagnetic wave reflected by the reflection object is closest to a predetermined time or an emission direction in which the elapsed time is included in a predetermined time range from the predetermined time,

wherein the second condition is that an emission direction in which a distance to the reflection object is closest to a predetermined distance or an emission direction in which the distance is included in a predetermined distance range, the distance computed based on the received signal of the measuring unit,

**characterized in that**:

in the first condition, the predetermined time becomes larger as the value for the speed of the moving object becomes larger, or the lower limit and the upper limit of the predetermined time range become larger as the value for the speed of the moving object becomes larger, and

in the second condition, the predetermined distance becomes larger as the value for the speed of the moving object becomes larger, or the lower limit and the upper limit of the predetermined distance range become larger as the value for the speed of the moving object becomes larger.

4. A computer program comprising instructions to cause the measuring device according to claim 1 or 2 to execute the control method according to claim 3.

**Patentansprüche**

1. Messvorrichtung (200), konfiguriert, um in einem sich bewegenden Objekt (240) installiert zu werden, wobei die Messvorrichtung aufweist:

eine Messeinheit (202), die einen Scan durch Aussenden einer elektromagnetischen Welle und Empfangen der von einem Reflexionsobjekt reflektierten elektromagnetischen Welle durchführt; und

eine Steuereinheit (204), welche die Messeinheit steuert,

wobei die Steuereinheit konfiguriert ist, um zu bestimmen, ob eine Geschwindigkeit des sich bewegenden Objekts gleich oder höher als eine vorbestimmte Geschwindigkeit ist oder nicht, und wobei die Steuereinheit einen Scanbereich (224) in einem zweiten Scan, der nach einem ersten Scan durchzuführen ist, basierend auf einem empfangenen Signal der Messeinheit bei dem ersten Scan durch die Messeinheit bestimmt, wenn bestimmt wird, dass die Geschwindigkeit des sich bewegenden Objekts gleich oder höher als eine vorbestimmte Geschwindigkeit ist,

und wobei die Steuereinheit konfiguriert ist, unter Aussenderichtungen (225, 226, 227) der elektromagnetischen Welle in dem ersten Scan eine Aussenderichtung zu bestimmen, die zumindest eine aus einer ersten Bedingung und einer zweiten Bedingung für die elektromagnetische Welle basierend auf dem empfangenen Signal in dem ersten Scan erfüllt, und den Scanbereich in dem zweiten Scan basierend auf der bestimmten Aussenderichtung bestimmt,

wobei die erste Bedingung ist, dass eine Aussenderichtung, in der eine verstrichene Zeit zwischen dem Zeitpunkt, an dem die Messeinheit die elektromagnetische Welle aussendet, und dem Zeitpunkt, an dem die Messeinheit die von dem Reflexionsobjekt reflektierte elektromagnetische Welle empfängt, am nächsten an einer vorbestimmten Zeit ist, oder eine Aussenderichtung, in der die verstrichene Zeit in einer vorbestimmten Zeitspanne ab der vorbestimmten Zeit enthalten ist,

wobei die zweite Bedingung ist, dass eine Aussenderichtung, in der ein Abstand zu dem Reflexionsobjekt am nächsten zu einem vorbestimmten Abstand ist, oder eine Aussenderichtung, in der der Abstand in einem vorbestimmten Abstandsbereich enthalten ist, wobei der Abstand basierend auf dem empfangenen Signal der Messeinheit berechnet wird,

**dadurch gekennzeichnet, dass**:

in der ersten Bedingung die vorbestimmte Zeit größer wird, wenn der Wert für die Geschwindigkeit des sich bewegenden Objekts größer wird, oder die Untergrenze und die Obergrenze der vorbestimmten Zeitspanne größer werden, wenn der Wert für die Geschwindigkeit des sich bewegenden Objekts größer wird, und

in der zweiten Bedingung der vorbestimmte Abstand größer wird, wenn der Wert für die Geschwindigkeit des sich bewegenden Objekts größer wird, oder die Untergrenze und die Obergrenze des vorbestimmten Abstandsbereichs größer werden, wenn der Wert für die Geschwindigkeit des sich bewegenden Objekts größer wird.

2. Messvorrichtung nach Anspruch 1, wobei die Messeinheit den Scan in einer Höhenrichtung durchführt.

3. Steuerungsverfahren zur Steuerung einer Messvorrichtung (200), die in einem sich bewegenden Objekt (240) installiert ist, unter Verwendung eines Computers, umfassend:

Veranlassen der Messvorrichtung zur Durchführung (S102) eines Scans durch Aussenden einer elektromagnetischen Welle und Empfangen der von einem Reflexionsobjekt reflektierten elektromagnetischen Welle;

Bestimmen (S204), ob eine Geschwindigkeit des sich bewegenden Objekts gleich oder höher als eine vorbestimmte Geschwindigkeit ist oder nicht; und

Bestimmen (S104) eines Scanbereichs (224) in einem zweiten Scan, der nach einem ersten Scan durchzuführen ist, basierend auf einem empfangenen Signal der Messvorrichtung in dem ersten Scan durch die Messvorrichtung, wenn bestimmt wird, dass die Geschwindigkeit des sich bewegenden Objekts gleich oder höher als eine vorbestimmte Geschwindigkeit ist,

Bestimmen, unter Aussenderichtungen (225, 226, 227) der elektromagnetischen Welle in dem ersten Scan, einer Aussenderichtung, die zumindest eine aus einer ersten Bedingung und einer zweiten Bedingung für die elektromagnetische Welle basierend auf dem empfangenen Signal in dem ersten Scan erfüllt, und

Bestimmen des Scanbereichs in dem zweiten Scan basierend auf der bestimmten Aussenderichtung,

wobei die erste Bedingung ist, dass eine Aussenderichtung, in der eine verstrichene Zeit zwischen dem Zeitpunkt, an dem die Messeinheit die elektromagnetische Welle aussendet, und dem Zeitpunkt, an dem die Messeinheit die von dem Reflexionsobjekt reflektierte elektromagnetische Welle empfängt, am nächsten an einer vorbestimmten Zeit ist, oder eine Aussenderichtung, in der die verstrichene Zeit in einer vorbestimmten Zeitspanne ab der vorbestimmten Zeit enthalten ist,

wobei die zweite Bedingung ist, dass eine Aussenderichtung, in der ein Abstand zu dem Reflexionsobjekt am nächsten zu einem vorbestimmten Abstand ist, oder eine Aussenderichtung, in der der Abstand in einem vorbestimmten Abstandsbereich enthalten ist, wobei der Abstand basierend auf dem empfangenen Signal der Messeinheit berechnet wird,

**dadurch gekennzeichnet, dass**:

in der ersten Bedingung die vorbestimmte Zeit größer wird, wenn der Wert für die Geschwindigkeit des sich bewegenden Objekts größer wird, oder die Untergrenze und die Obergrenze der vorbestimmten Zeitspanne größer werden, wenn der Wert für die Geschwindigkeit des sich bewegenden Objekts größer wird, und

in der zweiten Bedingung der vorbestimmte Abstand größer wird, wenn der Wert für die Geschwindigkeit des sich bewegenden Objekts größer wird, oder die Untergrenze und die Obergrenze des vorbestimmten Abstandsbereichs größer werden, wenn der Wert für die Geschwindigkeit des sich bewegenden Objekts größer wird.

4. Computerprogramm, welches Anweisungen aufweist, um die Messvorrichtung nach Anspruch 1 oder 2 zu veranlassen, das Steuerungsverfahren nach Anspruch 3 auszuführen.

**Revendications**

1. Dispositif de mesure (200) configuré pour être installé dans un objet en mouvement (240), le dispositif de mesure comprenant :

   une unité de mesure (202) qui effectue un balayage en émettant une onde électromagnétique et en recevant l'onde électromagnétique réfléchie par un objet de réflexion ; et
   une unité de commande (204) qui commande l'unité de mesure,
   dans lequel l'unité de commande est configurée pour déterminer si une vitesse de l'objet en mouvement est égale ou supérieure ou non à une vitesse prédéterminée, et dans lequel l'unité de commande détermine une plage de balayage (224) d'un deuxième balayage à effectuer après un premier balayage sur la base d'un signal reçu de l'unité de mesure lors du premier balayage par l'unité de mesure, lorsqu'il est déterminé que la vitesse de l'objet en mouvement est égale ou supérieure à une vitesse prédéterminée,
   et dans lequel l'unité de commande est configurée pour déterminer, parmi les directions d'émission (225, 226, 227) de l'onde électromagnétique du premier balayage, une direction d'émission qui satisfait à au moins l'une parmi une première condition et une deuxième condition pour l'onde électromagnétique sur la base du signal reçu lors du premier balayage, et détermine la plage de balayage du deuxième balayage sur la base de la direction d'émission déterminée,
   dans lequel la première condition est une direction d'émission dans laquelle un temps écoulé entre le moment de l'émission de l'onde électromagnétique par l'unité de mesure et le moment de réception de l'onde électromagnétique réfléchie par l'objet de réflexion par l'unité de mesure est le plus proche d'un temps prédéterminé, ou une direction d'émission dans laquelle le temps écoulé est inclus dans une plage de temps prédéterminée à partir du temps prédéterminé,
   dans lequel la deuxième condition est une direction d'émission dans laquelle une distance par rapport à l'objet de réflexion est plus proche d'une distance prédéterminée, ou une direction d'émission dans laquelle la distance est incluse dans une plage de distance prédéterminée, la distance étant calculée sur la base du signal reçu de l'unité de mesure,
   **caractérisé en ce que** :

   dans la première condition, le temps prédéterminé augmente à mesure que la valeur de la vitesse de l'objet en mouvement augmente, ou la limite inférieure et la limite supérieure de la plage de temps prédéterminée augmentent à mesure que la valeur de la vitesse de l'objet en mouvement augmente, et
   dans la deuxième condition, la distance prédéterminée augmente à mesure que la valeur de la vitesse de l'objet en mouvement augmente, ou la limite inférieure et la limite supérieure de la plage de distance prédéterminée augmentent à mesure que la valeur de la vitesse de l'objet en mouvement augmente.

2. Dispositif de mesure selon la revendication 1, dans lequel l'unité de mesure réalise le balayage dans une direction de la hauteur.

3. Procédé de commande pour commander un dispositif de mesure (200) installé dans un objet en mouvement (240) à l'aide d'un ordinateur, comprenant les étapes suivantes :

   amener le dispositif de mesure à réaliser (S102) un balayage en émettant une onde électromagnétique et en recevant l'onde électromagnétique réfléchie par un objet de réflexion ;
   déterminer (S204) si une vitesse de l'objet en mouvement est égale ou supérieure ou non à une vitesse prédéterminée ; et
   déterminer (S104) une plage de balayage (224) d'un deuxième balayage à effectuer après un premier balayage sur la base d'un signal reçu du dispositif de mesure lors du premier balayage par le dispositif de mesure lorsqu'il est déterminé que la vitesse de l'objet en mouvement est égale ou supérieure à une vitesse prédéterminée,
   déterminer, parmi les directions d'émission (225, 226, 227) de l'onde électromagnétique du premier balayage, une direction d'émission qui satisfait à au moins l'une parmi une première condition et une deuxième condition pour l'onde électromagnétique sur la base du signal reçu lors du premier balayage, et
   déterminer la plage de balayage du deuxième balayage sur la base de la direction d'émission déterminée,
   dans lequel la première condition est une direction d'émission dans laquelle un temps écoulé entre le moment de l'émission de l'onde électromagnétique par l'unité de mesure et le moment de réception de l'onde électromagnétique réfléchie par l'objet de réflexion par l'unité de mesure est le plus proche d'un temps prédéterminé, ou une direction d'émission dans laquelle le temps écoulé est inclus dans une plage de temps prédéterminée à partir du temps prédéterminé,

dans lequel la deuxième condition est une direction d'émission dans laquelle une distance par rapport à l'objet de réflexion est plus proche d'une distance prédéterminée, ou une direction d'émission dans laquelle la distance est incluse dans une plage de distance prédéterminée, la distance étant calculée sur la base du signal reçu de l'unité de mesure,

**caractérisé en ce que** :

dans la première condition, le temps prédéterminé augmente à mesure que la valeur de la vitesse de l'objet en mouvement augmente, ou la limite inférieure et la limite supérieure de la plage de temps prédéterminée augmentent à mesure que la valeur de la vitesse de l'objet en mouvement augmente, et
dans la deuxième condition, la distance prédéterminée augmente à mesure que la valeur de la vitesse de l'objet en mouvement augmente, ou la limite inférieure et la limite supérieure de la plage de distance prédéterminée augmentent à mesure que la valeur de la vitesse de l'objet en mouvement augmente.

4. Programme informatique comprenant des instructions pour amener le dispositif de mesure selon la revendication 1 ou 2 à exécuter le procédé de commande selon la revendication 3.

# FIG. 1

200

MEASURING DEVICE

MEASURING UNIT — 202

CONTROL UNIT — 204

FIG. 2

LATERAL DIRECTION

HEIGHT DIRECTION

224

FIG. 3A

200

GROUND SURFACE

FIG. 3B

200

GROUND SURFACE

## FIG. 4A

## FIG. 4B

FIG. 5

```
                    ( Start )
                        |
                        v
+------------------------------------------------+
|         PERFORM SCAN BY EMITTING               |  ~ S102
|            ELECTROMAGNETIC WAVE                 |
+------------------------------------------------+
                        |
                        v
+------------------------------------------------+
| DETERMINE SCAN RANGE IN SUBSEQUENT SCAN        |
| BASED ON RECEIVED SIGNAL OF MEASURING UNIT     |  ~ S104
| OBTAINED BY SCAN PERFORMED IN S102             |
+------------------------------------------------+
                        |
                        v
                    (  End  )
```

# FIG. 6

INTEGRATED CIRCUIT — 100

NETWORK INTERFACE — 112

BUS — 102

PROCESSOR — 104

MEMORY — 106

STORAGE DEVICE — 108

INPUT/OUTPUT INTERFACE — 110

EMITTER DRIVER CIRCUIT — 30

# FIG. 7

ELECTROMAGNETIC
WAVE

REFLECTION WAVE

OBJECT

202

MEASURING UNIT

EMITTER

RECEIVER

10

50

30

EMITTER
DRIVER
CIRCUIT

204

CONTROL
UNIT

# FIG. 8

MEASUREMENT UNIT

12

LIGHT PROJECTOR

14

LIGHT SOURCE

LIGHT

REFLECTED LIGHT

MOVABLE REFLECTOR

LIGHT RECEIVER

16

52

32

LIGHT PROJECTOR DRIVER CIRCUIT

34

36

LIGHT SOURCE DRIVER CIRCUIT

MOVABLE REFLECTOR DRIVER CIRCUIT

202

204

CONTROL UNIT

FIG. 9

200

240

CAN
COMMUNICATION
NETWORK
242

ECU
244

FIG. 10A

LATERAL DIRECTION

HEIGHT DIRECTION

220-1  220-2

224

220-3

220-n

FIG. 10B

LATERAL DIRECTION

HEIGHT DIRECTION

224

222-1
222-2

222-3

222-n

FIG. 11

LATERAL DIRECTION

224

## FIG. 12A

## FIG. 12B

FIG. 13

FIG. 14

## FIG. 15

EP 3 508 873 B1

## FIG. 16

Start

↓

PERFORM SCAN BY EMITTING
ELECTROMAGNETIC WAVE — S102

↓

ACQUIRE SPEED INFORMATION — S202

↓

IS SPEED EQUAL TO OR HIGHER
THAN PREDETERMINED SPEED? — S204

NO →

YES ↓

DETERMINE SCAN RANGE IN HEIGHT DIRECTION — S104

↓

End

## FIG. 17

300

| SPEED | CONDITION |
|---|---|
| $V \leqq v1$ [km/h] | a1[m] |
| $v1$[km/h] $< V \leqq v2$ [km/h] | a2[m] |
| $v2$[km/h] $< V \leqq v3$ [km/h] | a3[m] |
| . . . | . . . |

302    304

# FIG. 18

```
                    ┌─────────┐
                    │  Start  │
                    └────┬────┘
                         │
                         ▼
   ┌─────────────────────────────────────────┐
   │      PERFORM SCAN BY EMITTING            │
   │       ELECTROMAGNETIC WAVE              │─── S102
   └─────────────────────┬───────────────────┘
                         │
                         ▼
   ┌─────────────────────────────────────────┐
   │       ACQUIRE SPEED INFORMATION          │─── S202
   └─────────────────────┬───────────────────┘
                         │
                         ▼
   ┌─────────────────────────────────────────┐
   │    DETERMINE PREDETERMINED CONDITION     │─── S302
   └─────────────────────┬───────────────────┘
                         │
                         ▼
   ┌─────────────────────────────────────────┐
   │  DETERMINE SCAN RANGE IN HEIGHT DIRECTION │─── S104
   └─────────────────────┬───────────────────┘
                         │
                         ▼
                    ┌─────────┐
                    │   End   │
                    └─────────┘
```

**REFERENCES CITED IN THE DESCRIPTION**

**Patent documents cited in the description**

- JP 2006258604 A
- US 2004065814 A1
- US 2005219506 A1
- JP 2004333440 A
- JP H0829536 A
- JP 2009115628 A